(19) Europäisches Patentamt
European Patent Office
Office européen des brevets

(11) Publication number: **0 132 920**
**A1**

(12) # EUROPEAN PATENT APPLICATION

(21) Application number: **84303495.0**

(22) Date of filing: **23.05.84**

(51) Int. Cl.[4]: **C 09 B 29/039**
//D06P1/06

(30) Priority: **27.06.83 GB 8317353**

(43) Date of publication of application:
**13.02.85 Bulletin 85/7**

(84) Designated Contracting States:
**BE CH DE FR GB IT LI**

(71) Applicant: **IMPERIAL CHEMICAL INDUSTRIES PLC**
**Imperial Chemical House Millbank**
**London SW1P 3JF(GB)**

(72) Inventor: **Moore, John Howarth**
**15 Westbury Road**
**Crumpsall Manchester M8 6RX(GB)**

(74) Representative: **Stephenson, Kenneth et al,**
**Imperial Chemical Industries PLC Legal Department: Patents PO Box 6**
**Welwyn Garden City Herts, AL7 1HD(GB)**

(54) **Monoazo dye.**

(57) Water-soluble monoazo dyes for polyamide fibres wherein the diazo component is 5-aminoiso- thiazole-4-sulphonic acid and the coupling component is an arylamine having no sulphonic acid groups.

EP 0 132 920 A1

MONOAZO DYE

This invention relates to monoazo dyes and in particular to such dyes containing a sulpho isothiazole residue.

Azo dyes derived from the use of heterocyclic amines as diazo components are well known e.g. dyes from aminobenzthiazoles and the dyes from amino isothiazoles which are described in US 4282144. We have discovered a valuable class of novel dyes containing a sulpho isothiazole residue.

According to the present invention there are provided water soluble monoazo dyes which, in the free acid form, are of the formula:

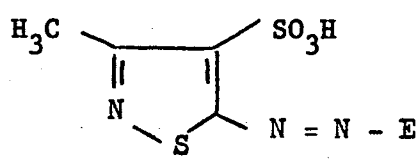

(1)

wherein E represents the residue of a coupling component of the arylamine series free from sulphonic acid groups.

A preferred class of dyes is those in which E is the residue of a phenylamine or naphthylamine coupling component.

A particularly preferred class of the dyes of the invention comprises dyes of the formula:

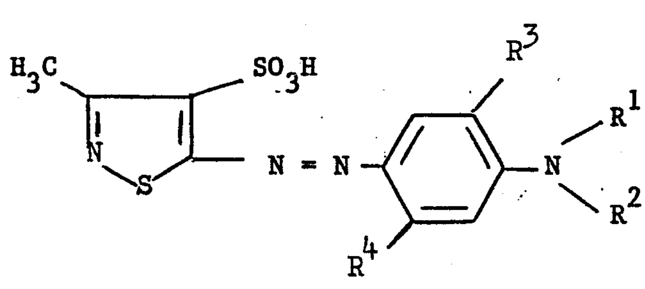

(2)

wherein $R^1$ represents hydrogen or optionally substituted alkyl, $R^2$ represents hydrogen, optionally substituted alkyl, optionally substituted aryl or cycloalkyl, $R^3$ represents hydrogen, halogen, lower alkyl or lower alkoxy and $R^4$ represents hydrogen, halogen, lower alkyl, lower alkoxy or acylamino.

The expressions "lower alkyl" and "lower alkoxy" used herein mean alkyl and alkoxy groups containing one to four carbon atoms.

The optionally substituted alkyl radicals which may be represented independently by $R^1$ and $R^2$ are preferably optionally substituted lower alkyl radicals and as examples of such radicals there may be mentioned hydroxy lower alkyl, for example beta-hydroxyethyl, beta- or gamma-hydroxypropyl and delta-hydroxybutyl, lower alkoxy lower alkyl, for example beta-methoxyethyl, beta-ethoxyethyl and gamma-methoxypropyl, aryloxy lower alkyl, for example beta-phenoxyethyl, cyano lower alkyl, for example cyanoethyl, aryl lower alkyl, for example benzyl, chlorobenzyl and beta-phenylethyl, acyloxy lower alkyl, for example beta-acetoxyethyl and beta-benzoyloxyethyl, alkoxycarbonyl lower alkyl, for example beta-methoxycarbonylethyl, lower alkoxy lower alkoxy carbonyl lower alkyl, for example beta-(beta-methoxyethoxy carbonyl)ethyl and chloro lower alkyl, for example gamma-chloropropyl.

Acylamino groups which may be represented by $R^4$ include, in particular, groups of the formulae $-NHCOR^5$ and $-NHSO_2R^6$ wherein $R^5$ represents hydrogen, alkyl (especially lower alkyl), aryl or aminoalkyl and $R^6$ represents optionally substituted lower alkyl or aryl.

The dyes of the invention may be manufactured by a process which comprises coupling the diazonium salt from 5-amino-3-methyl isothiazole-4-sulphonic acid with an arylamine coupling component free of sulphonic acid groups.

The 5-amino-3-methylisothiazole-4-sulphonic acid may be obtained by the method described in J.Chem.Soc., 1965, pages 7283 and 7284. An alternative method is to effect ring closure on beta-iminothiobutyramide forming 5-amino-3-methylisothiazole which may be converted to the 5-formylamino compound which may be sulphonated in the 4-position. Hydrolysis of the formylamino group provides 5-amino-3- methylisothiazole-4-sulphonic acid.

Examples of suitable arylamine coupling components include

1-naphthylamine
N,N-diethyl-1-naphthylamine
N,N-diethylaniline
N,N-diethyl-m-toluidine
N-benzylaniline
N-(o-chlorobenzyl)aniline
N-benzyl-m-toluidine
N.N-dibenzyl-m-toluidine
N-ethyl-m-toluidine
N-ethyl-N-benzyl-m-toluidine
N-butyl-N-benzyl-m-toluidine
N-ethyl-N-(o-chlorobenzyl)-m-toluidine
N-ethyl-N-(beta-hydroxyethyl)aniline
N,N-bis-(beta-hydroxyethyl)aniline
N-ethyl-N-(beta-methoxyethyl)aniline
N-ethyl-N-(beta-phenoxyethyl)aniline
N-ethyl-N-(beta-cyanoethyl)aniline
N-ethyl-N-(beta-phenylethyl)aniline
N-ethyl-N-(beta-phenylethyl)-m-toluidine
N-ethyl-N-(beta-acetoxyethyl)-m-toluidine
N-ethyl-N-(beta-benzoyloxyethyl)-m-toluidine
N,N-bis-(beta-ethoxycarbonylethyl)aniline
N,N-bis-[beta-(beta'-methoxyethoxycarbonyl)ethyl]aniline
N-ethyl-N-(beta-chloroethyl)aniline
N,N-diethyl-m-aminoacetanilide
N,N-diethyl-m-aminobenzanilide
N-benzyl-2-methoxy-5-methylaniline
N-(p-chlorobenzyl)-2-methoxy-5-methylaniline
N,N-diethyl-2-methoxy-5-acetylaminoaniline
N-benzyl-o-chloroaniline
N,N-diethyl-m-tosylaminoaniline.

The reactions leading to the formation of the dyes of the invention may be performed using conditions that have been fully

described in the prior art for such reactions. Similarly, the dyes may be isolated by known methods and, as in the case of other dyes containing sulphonic acid groups, it is often convenient to isolate and use the dyes in the form of their water-soluble salts, particularly their alkali metal or ammonium salts and especially sodium salts. It is understood that the invention relates to both the free acids and their salts.

The dyes of the invention are suitable for applying to polyamide textile materials such as wool and silk but especially to synthetic polyamide textile materials, for example nylon 66, nylon 6 and nylon 11, using any of the general methods known for the application of acid dyes to such materials. The dyes provide a variety of shades having a high degree of fastness to wet treatments and to light.

The invention is illustrated by the following Examples.

Examples 1-7

1.6g of sodium nitrite were added to 20 parts of 98% sulphuric acid allowing the exotherm to raise the temperature to 70°C. The solution was stirred until the temperature fell to 30°C and was then further cooled to 0°C. 4.28g of 5-amino-3-methylisothiazole-4-sulphonic acid were then added over 15 minutes at 0°C. The solution was then stirred for 1 hour at 0°C. 2g of water were then added dropwise from a burette whilst maintaining the temperature below 5°C. The diazo solution was then stirred for a further 10 minutes at 0°C.

The diazo solution was then added with stirring at 0°C to a solution containing 5.5g of N-benzyl-N-ethyl-m-toluidine in 75g of ice/water and 100 parts of acetone. The pH was then raised to 3-4 by careful addition of 25% sodium acetate solution. A further 150g of ice and water were added and the suspension was stirred for a further 3 hours at 0°C. The dyestuff in the form of the free sulphonic acid was then filtered off and washed with 150g of water. The product was converted to the sodium salt by treatment with sodium hydroxide. It dyes synthetic polyamide fibres from a weakly acidic dyebath in red shades.

Further red dyestuffs were obtained when the above diazo component was reacted with the coupling components listed below in the manner described above.

| Example | Coupling Component | Shade |
|---|---|---|
| 2 | 3-(N-benzyl-N-ethylamino)acetanilide | Mid red |
| 3 | 3-(N,N-diethylamino)acetanilide | Mid red |
| 4 | N-benzyl-N-ethylaniline | Yellowish red |
| 5 | 3-(N,N-diethylamino)benzanilide | Bluish red |
| 6 | 3-(N,N-dibenzylamino)acetanilide | Yellowish red |
| 7 | N,N-dibenzylaniline | Orange |
| 8 | 3'-N,N-diethylamino-4-methyl benzanilide | Bluish red |
| 9 | 3-N,N-diethylamino-alpha-naphthanilide | Bluish red |
| 10 | 3'-N,N-diethylamino-4-bromobenzanilide | Bluish red |
| 11 | 3-(N,N-diethylamino)cyclohexanilide | Mid red |
| 12 | 3'-N,N-diethylamino-3-nitrobenzanilide | Mid red |
| 13 | 1-N-ethylaminonaphthalene | Violet |
| 14 | 3'-N,N-diethylamino-4-chlorobenzanilide | Bluish red |
| 15 | 3-(N,N-dibutylamino)benzanilide | Bluish red |
| 16 | 3'-(N,N-diethylamino)chloroacetanilide | Mid red |

## CLAIMS

1. A water-soluble monoazo dye which, in the free acid form, has the formula:

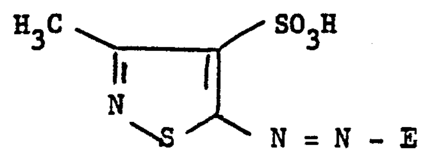

wherein E represents the residue of a coupling component of the arylamine series free from sulphonic acid groups.

2. A water-soluble monoazo dye according to claim 1 wherein E is the residue of a phenylamine or naphthylamine coupling component.

3. A water-soluble monoazo dye according to claim 2 which has the formula:

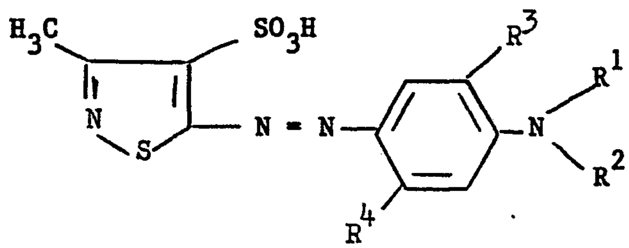

wherein $R^1$ represents hydrogen or optionally substituted alkyl, $R^2$ represents hydrogen, optionally substituted alkyl, optionally substituted aryl or cycloalkyl, $R^3$ represents hydrogen, halogen, lower alkyl or lower alkoxy and $R^4$ represents hydrogen, halogen, lower alkyl, lower alkoxy or acylamino.

4. A method for the preparation of a water-soluble monoazo dye as defined in claim 1 which comprises coupling diazotised 5-aminoisothiazole-4-sulphonic acid with an arylamine coupling component free of sulphonic acid groups.

5. A process for the coloration of polyamide textile materials which comprises applying thereto a water-soluble monoazo dye as defined in claim 1.

KS/BH

17.5.84.

European Patent Office

# EUROPEAN SEARCH REPORT

0132920

Application number

EP 84 30 3495

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | DE-A-3 041 838 (BASF)<br>* Claim 1; formula I *<br>--- | 1,4,5 | C 09 B 29/039//<br>D 06 P 1/06 |
| A | EP-A-0 020 161 (EASTMAN KODAK)<br>* Page 1, paragraph 1; pages 36-39, table 7 * & US - A - 4 282 144 (Cat. D)<br>--- | 1,4,5 | |
| P,X | US-A-4 444 684 (WEAVER, ELLER)<br>* Column 1, lines 6-24; columns 4,5, table 1; examples 4-6, 28-32; column 12, table 8, examples 8,9; column 13, table 10, examples 4-6 *<br>----- | 1-5 | |
| | | | **TECHNICAL FIELDS SEARCHED (Int. Cl.4)** |
| | | | C 09 B 29/00 |

The present search report has been drawn up for all claims

| Place of search | Date of completion of the search | Examiner |
|---|---|---|
| THE HAGUE | 12-10-1984 | GREEN C.H. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document